# EUROPÄISCHE PATENTSCHRIFT

(11) **EP 1 446 318 B1**
(45) Veröffentlichungstag und Bekanntmachung des Hinweises auf die Patenterteilung: **13.07.2005**
(21) Anmeldenummer: 02779566.5
(22) Anmeldetag: 21.11.2002
(51) Int. Cl.: B62D 5/06, B62D 5/083, F15B 19/00

(54) **HYDRAULISCHE HILFSKRAFTLENKUNG UND EIN EINSTELLVERFAHREN FÜR EINE SOLCHE LENKUNG**
HYDRAULIC SERVO-ASSISTED STEERING SYSTEM FOR VEHICLES AND A CONTROLLING METHOD FOR A STEERING SYSTEM OF THIS TYPE
DIRECTION ASSISTEE HYDRAULIQUE ET PROCEDE DE REGLAGE D'UNE DIRECTION DE VEHICULE DE CE TYPE

(30) Priorität: 23.11.2001 DE 10157548; 23.11.2001 DE 10157527
(43) Veröffentlichungstag der Anmeldung: 18.08.2004
(73) Patentinhaber: ZF Lenksysteme GmbH, 73527 Schwäbisch Gmünd (DE)
(72) Erfinder: WIETZEL, Uwe, 73579 Schechingen (DE); SCHÄNZEL, Rainer, 73457 Essingen (DE); KRUTTSCHNITT, Andreas, 89522 Heidenheim (DE)
(86) Internationale Anmeldenummer: PCT/EP2002/013049
(87) Internationale Veröffentlichungsnummer: WO 2003/043870

(56) Entgegenhaltungen:
- DE-A- 4 134 850
- DE-A- 4 220 624
- DE-C- 4 201 311

## Beschreibung

Die Erfindung betrifft eine hydraulische Hilfskraftlenkung für Kraftfahrzeuge gemäß dem Oberbegriff des Anspruches 1 und ein Einstellverfahren für eine solche Lenkung, insbesondere zum Abgleich von durch Fertigungstoleranzen bedingter Abweichungen von einem Soll-Lenkverhalten solcher Fahrzeug-Servolenkungen, gemäß dem Oberbegriff des Anspruches 12.

Hilfskraftlenkungen der vorgenannten Art sind beispielsweise aus der DE 42 20 624 A1 bekannt. Bei diesen wird über ein hydraulisches Lenkventil in Form eines Drehschieberventils die drehmomentenabhängige Beaufschlagung des die Lenkkraft unterstützenden Servostellers gesteuert. Hierzu ist der Drehschieber des Drehschieberventiles zu einem durch die Lenkspindel gebildeten Eingangsglied drehfest, und es ist das Eingangsglied gegenüber einem mit dem Lenkgetriebe verbundenen Ausgangsglied über eine Drehstabfeder drehmomentenabhängig drehwinkelbegrenzt verdrehbar verbunden. Das Ausgangsglied seinerseits ist zu einer zum Drehschieber koaxialen und gegenüber diesem verdrehbaren Steuerbuchse drehfest festgelegt. In Abhängigkeit von der drehmomentenabhängigen Verdrehung der Steuerbuchse gegenüber dem Drehschieber ergeben sich unterschiedliche Überdeckungsgrade zwischen deren korrespondierenden Anschlussquerschnitten, und somit unterschiedliche Öffnungsquerschnitte im Zu- und Ablauf zum Servosteller.

Der Drehmomentenabstützung über die Drehstabfeder ist eine geschwindigkeitsabhängige Drehmomentenabstützung überlagert und hierzu ist die Steuerbuchse stirnseitig axial über einen Rückwirkungskolben beaufschlagt, der zum Eingangsglied, bzw. zum Drehschieber axial verschieblich drehfest abgestützt ist und der in Richtung auf die Steuerbuchse federbelastet ist. Die einander zugewandten Stirnseiten der Steuerbuchse und des Rückwirkungskolbens weisen entgegengesetzt geneigte Abdrängflächen auf, zwischen denen Wälzkörper liegen, so dass sich entsprechend der drehmomentabhängigen Verdrehung der Steuerbuchse gegenüber dem Drehschieber bzw. dem Eingangsglied durch das Auflaufen der Wälzkörper auf die Abdrängflächen eine Verlagerung des Rückwirkungskolbens entgegen der Kraft der diesen in Richtung auf die Steuerbuchse beaufschlagenden Feder ergibt.

Der die Feder aufnehmende Raum ist als Druckraum ausgebildet und an die Hochdruckseite des Hydraulikkreislaufes anzuschließen, derart, dass der Rückwirkungskolben, unterstützend zur beaufschlagenden Federkraft, in Richtung auf die Steuerbuchse druckbelastet ist, so dass mit zunehmendem Druck die Abstützung zwischen Ein- und Ausgangsglied drehsteifer wird. Die Druckversorgung der Rückwirkungskammer wird über einen elektro-hydraulischen Wandler mit einem eine hydraulische Ventilanordnung beaufschlagenden Stellmagneten geschwindigkeitsabhängig gesteuert.

Ein Lenkventil dieser Art hat bei Geschwindigkeiten um Null eine Ausgangslage, die einer Stellung maximaler Servowirkung entspricht, wie sie zum Beispiel zum Parkieren gewünscht wird. Ausgehend von dieser Lage wird die Lenkung durch die zur Federkraft gleichgerichtete, überlagerte Druckbeaufschlagung des Rückwirkungskolbens mit steigender Geschwindigkeit drehsteifer, so dass für Lenkbewegungen ein höheres Eingangsmoment aufzubringen ist.

Aus der DE 42 01 311 C1 ist eine Hilfskraftlenkung mit gleichem Grundaufbau bekannt, das Lenkventil hat aber eine Ausgangslage, die einer Stellung minimaler Servowirkung entspricht, wie sie zum Beispiel für höhere Geschwindigkeiten angestrebt wird, um durch eine entsprechend drehsteife Lenkung ein schwammiges Lenkgefühl zu vermeiden und verbesserte Rückmeldungen von der Fahrbahn zu erhalten. Geschwindigkeitsabhängig wird der Rückwirkungskolben entgegengerichtet zur Federkraft druckbeaufschlagt, und zwar derart, dass sich bei Geschwindigkeiten um Null die angestrebte hohe Servowirkung ergibt, bei der das eingangsseitig eingegebene Lenkmoment auf Grund der durch die Druckbeaufschlagung verringerten Versteifung der Drehstabfeder über den federbeaufschlagten Rückwirkungskolben verhältnismäßig drehweich abgestützt ist.

Je nach Ausgangslage kann somit die Druckbeaufschlagung des Rückwirkungskolbens genutzt werden, um bei zur Federkraft gleichgerichteter Druckbeaufschlagung die Lenkung mit zunehmender Geschwindigkeit in Richtung hart zu verstellen, oder, bei entgegengesetzter Druckbeaufschlagung, die Lenkung ausgehend von ihrer harten, drehsteifen Einstellung mit sinkender Geschwindigkeit drehweicher zu machen, wie dies zum Parkieren erwünscht ist.

Ungeachtet der diesbezüglichen jeweiligen konstruktiven Auslegung ist lenkventilseitig durch den Drehschieber und die überlagerten, geschwindigkeitsabhängig arbeitenden Stell- und Steuerelemente eine längere Funktionskette mit wechselseitigen Beeinflussungen gegeben, und es können ungeachtet der Prüfung und Einstellung der einzelnen Funktionselemente Toleranzen auftreten, die insbesondere im Rahmen der Serienfertigung zu Streuungen bezüglich der jeweiligen Ventilkennlinie führen, die auch bei Fahrzeugen gleicher Ausrüstung spürbar werden und ein unterschiedliches Lenkgefühl vermitteln.

In der DE 41 34 850 A1 wird ein Verfahren zum Eichen einer Hilfskraftlenkung mit einem Standardwert des Lenkaufwandes in einer Hilfskraftlenkung mit einem elektrisch steuerbaren variablen Lenkaufwand beschrieben, wobei das Ansprechverhalten der Vorrichtung auf eine Eingabekraft gemessen wird, eine Abweichung des Ansprechverhaltens der Vorrichtung von einem Standardwert bestimmt wird, entsprechend der Abweichung ein Korrekturwert errechnet wird, der Korrekturwert gespeichert wird und der variable Lenkaufwand entsprechend dem Korrekturwert so gesteuert wird, dass die Abweichung zumindest teilweise ausgeglichen wird.

Solche Serienstreuungen führen bei Herstellern von Fahrzeugen zu Beanstandungen, und ebenso bei Endkunden, insbesondere wenn diese als Abweichungen vom Gewohnten empfunden werden.

Da die Überprüfung der Lenkung in ihrer Gesamtheit und im Gesamtzusammenbau im Fahrzeug bei vertretbarem Aufwand kaum möglich ist, insbesondere aber auch ein Zugriff auf die hydraulischen Elemente ohne Demontage nicht realisierbar ist, muss in der Prüfung der Einzelelemente auf spezielle Einstellvorrichtungen zurückgegriffen werden. Mit deren Hilfe wird der elektro-hydraulische Wandler durch mechanischen Eingriff auf eine Wandlerkennlinie eingestellt, die der Soll-Kennlinie des Lenkventiles bestmöglich entspricht, die also, bezogen auf den wirksamen Spulenstrom des Wandlers, geschwindigkeitsabhängig einen Rückwirkungsdruck, d. h. einen Druckaufbau in der teilweise durch den Rückwirkungskolben begrenzten Rückwirkungskammer zur Folge hat, der der jeweils angestrebten, durch die Soll-Ventilkennlinie veranschaulichten Servowirkung entspricht.

Eine derartige Kalibrierung des elektro-hydraulischen Wandlers ist als solche von den Toleranzen der zugehörigen Einstellvorrichtung beeinflusst, und in der Paarung zum nachgeordneten hydraulischen Ventil, insbesondere einem Drehschieberventil, von dessen Toleranzen und denen eines nachgeordneten Lenkgetriebes überlagert. Nachträgliche Eingriffsmöglichkeiten, im Sinne eines Nachjustierens durch mechanischen Eingriff in das hydraulische Lenkventil, sind praktisch nicht gegeben, somit nachträgliche Änderungen allenfalls mit erheblichem Aufwand möglich.

Eine Aufgabe der Erfindung ist es, einen Weg aufzuzeigen, der mit geringem Aufwand, und insbesondere auch in der Serienfertigung gut beherrschbar, eine Eingrenzung der Toleranzen in Bezug auf die dem angestrebten Lenkverhalten zugeordnete Soll-Ventilkennlinie ermöglicht. Eine weitere Aufgabe der Erfindung ist es ein Prüfverfahren der eingangs genannten Art aufzuzeigen, das es möglich macht, mit geringerem Aufwand, und insbesondere auch in der Serienfertigung gut beherrschbar, die Eingrenzung der Toleranzen in Bezug auf die einem angestrebten Lenkverhalten zugeordnete Soll-Lenkkennlinie und die dieser entsprechende Soll-Ventilkennlinie zu ermöglichen.

Erreicht wird dies einerseits erfindungsgemäß durch die Merkmale des Anspruches 1, demzufolge dem elektro-hydraulischen Wandler mehrere Bestromungskennlinien zugeordnet werden und die in der Ventilkennlinie zum Ausdruck kommende Abhängigkeit zwischen Lenkeingangsmoment, d. h. Lenkradbetätigungsmoment und über den elektro-hydraulischen Wandler mitbeeinflusstem Druck dazu genutzt wird, Abweichungen von der Soll-Ventilkennlinie durch Zupaarung einer Bestromungskennlinie - aus der Schar möglicher Bestromungskennlinien des Wandlers - zu korrigieren, die die Abweichung der tatsächlichen, also der Ist-Ventilkennlinie von der Soll-Ventilkennlinie bestmöglich kompensiert.

Entsprechende Bestromungskennlinien des elektro-hydraulischen Wandlers lassen sich im Rahmen der Erfindung dem Steuergerät oder dem Wandler zugeordnet ablegen bzw. realisieren.

Die unmittelbare Zuordnung zum Steuergerät bietet die Möglichkeit, ausgehend vom Steuergerät, bereits der jeweiligen Bestromungskennlinie entsprechend den Wandler zu bestromen. Die Zuordnung zum Wandler bietet die Möglichkeit, ausgehend von diesem im Steuergerät eine Bestromung mit jeweils vorgegebener Stromstärke abzurufen, oder, seitens des Wandlers die vom Steuergerät vorgegebene Bestromung korrigierend zu variieren, wobei hierfür dem Wandler eine Hardware zugeordnet sein kann, beispielsweise in Form eines entsprechend bestückten Adapters. Als Bestückung kommen zuschaltbare oder abtrennbare Widerstände oder auch Widerstandsnetzwerke in Frage.

Eine bevorzugte erfindungsgemäße Lösung besteht darin, das hydraulische Lenkventil bezüglich seiner jeweils gemessenen Ist-Ventilkennlinie im Grad der Abweichung zur vorgegebenen Soll-Ventilkennlinie zu klassifizieren und bezogen auf eine wandlerseitig vorgesehene Schar von Bestromungskennlinien eine Zuordnung zu treffen, die bei entsprechender Zupaarung eine bestmögliche Annäherung an die jeweilige Soll-Ventilkennlinie erbringt. Bezogen auf den Bereich, in dem üblicherweise die Abweichungen der gemessenen Ist-Ventilkennlinie von der zugehörigen Soll-Ventilkennlinie liegen, wird also eine Schar von Bestromungskennlinien vorgegeben, deren einzelne jeweils einen klassifizierten Abweichungsbereich von der Soll-Ventilkennlinie abdeckt, so dass der Abweichungsbereich von der jeweiligen Soll-Ventilkennlinie bis zur Ausschussgrenze über eine entsprechende Bestromungskennlinie für den Wandler segmentiert abgedeckt ist und eine zupaarende Klassifizierung ermöglicht wird, die zu einer weitgehenden Kompensation der jeweils gemessenen Abweichung von der Soll-Ventil-kennlinie führt und dadurch das gegebene Toleranzband wesentlich einengt.

Die jeweils durch Messung ermittelte Klassifizierung für die seitens des Lenkventiles gegebene Abweichung zur Soll-Ventilkennlinie wird im Rahmen der Erfindung dem Lenkventil zugeordnet abgespeichert, so dass nach Einbau des Lenkventiles in das Fahrzeug und Herstellen der elektrischen Verbindung zum Steuergerät, das üblicherweise fahrzeugseitig vorgesehen ist, automatisiert eine Zupaarung jeweiliger, klassifizierter Kennlinien automatisch erfolgen kann.

Dies ist auch bei einer in Hardware vorgegebenen Zuordnung von Bestromungskennlinien beispielsweise in einem Adapterstecker zum Wandler möglich, wenn durch Einspielen des einer jeweiligen Ist-Ventilkennlinie zugeordneten Klassifizierungssignals die der korrespondierenden Bestromungskennlinie zugeordnete Hardwarekonfiguration aktiviert wird.

Andererseits wird die Aufgabe gelöst gemäß der Erfindung mit einem Prüfverfahren, bei dem, bezogen auf eine vorgegebene Fahrzeuggeschwindigkeit, der einer Ist-Ventilkennlinie entsprechende Beaufschlagungsdruck durch Änderung der Stromstärke des über den Steller laufenden Stromes gegen den Soll-Beaufschlagungsdruck abgeglichen wird und bei dem über die geschwindigkeitsabhängige Bestromung des Stellers eine entsprechende Kalibrierung durchgeführt wird.

Dieser Abgleich kann erfindungsgemäß bezogen auf eine oder mehrere geschwindigkeitsabhängig vorgegebene Soll-Ventilkennlinien erfolgen, und bezüglich der jeweiligen Ventilkennlinie in einem oder mehreren Punkten, wobei sich ein Abgleich in einem Punkt bezüglich der jeweiligen Ist-Ventilkennlinie gegen die Soll-Ventilkennlinie in Anbetracht des nur geringfügigen Versatzes der im wesentlich gleichgerichtet verlaufenden Kennlinien im Regelfall als ausreichend erweist und zu einer so weitgehenden Annäherung führt, dass noch bestehende restliche Abweichungen toleriert werden können.

Werden das Lenkventil und der zugehörige hydraulische Wandler als eine Prüfeinheit behandelt, so kann die vom Steuergerät vorgegebene Bestromung des Wandlers - bei wandlerseitiger Abspeicherung eines Wandler-Kennfeldes mit den Koordinaten Fahrzeuggeschwindigkeit, Lenkeingangsmoment und elektrischer Widerstand - in Abhängigkeit vom jeweiligen gegebenen Lenkeingangsmoment und bezogen auf die jeweilige Geschwindigkeit so variiert werden, dass das Soll-Lenkverhalten erreicht wird, also über eine entsprechende Veränderung der vorgegebenen Bestromung der der Soll-Ventilkennlinie entsprechende Beaufschlagungsdruck erreicht wird. Mit der bei dieser Vorgehensweise notwendigen Messung des Lenkeingangsmomentes ist allerdings ein gewisser Aufwand verbunden.

Ein vereinfachtes Vorgehen ergibt sich im Rahmen der Erfindung, wenn die Ventil-Kennlinie als Überlagerung einer hydraulischen und einer elektrischen Kennlinie betrachtet wird, wobei die hydraulische Kennlinie durch die mechanische Auslegung der Ventilbauteile mit ihren Toleranzen als vorgegeben betrachtet wird. Die elektrische Kennlinie ist als durch die Bestromung des Wandlers fahrgeschwindigkeitsabhängige Kennlinie zu sehen. Speichert man, bezogen auf eine aus Lenkventil mit elektrohydraulischem Wandler bestehende Prüfeinheit, den Wandlerstrom bezogen auf ein gegebenes Lenkmoment über der Fahrgeschwindigkeit beim Nachfahren einer einer Soll-Lenkkenn-linie entsprechenden Ventilkennlinie ab, so enthält die Bestromungskennlinie des Wandlers bereits den Korrekturfaktor, der die Auswirkung der in Bezug auf die Prüfeinheit gegebenen mechanischen Toleranzen berücksichtigt. Damit entfällt die Notwendigkeit einer Drehmomentenmessung, und es ergibt sich eine der Soll-Ventilkennlinie stark angenäherte Druckbeaufschlagung.

Diese Entsprechung ist um so vollkommener, je genauer über einer Fahrgeschwindigkeit eine jeweilige Soll-Ventilkennlinie abgefahren wird, wobei die Genauigkeit, bezogen auf eine abgefahrene geschwindigkeitsabhängige Soll-Ventilkennlinie umso größer ist, je größer die Zahl der angefahrenen Punkte der Soll-Ventilkennlinie ist.

Eine besonders zweckmäßige und im Rahmen der Erfindung bevorzugte Lösung für ein zeitlich gestrafftes Einstellverfahren besteht darin, sich die weitgehend entsprechende Charakteristik der geschwindigkeitsabhängigen Soll-Ventilkennlinien, und auch der hierzu jeweils gegebenen, toleranzbedingten Ist-Kennlinien zunutze zu machen und ausgehend hiervon das Prüf- und Einstellverfahren bezüglich des Abgleichs auf einen oder wenige Einstellpunkte des Lenkeingangsmomentes zu beschränken und, bezogen auf den jeweiligen Einstellpunkt, über die Änderung der Bestromung des Wandlers in diesem Punkt den entsprechenden Abgleich herbeizuführen, unter der Prämisse, dass, entsprechend dem weitgehend korrespondierenden Verlauf der Soll-Ventilkennlinien wie auch ihrer zugehörigen, toleranzbedingten Ist-Kennlinien, eine Korrektur auf Basis des punktuell ermittelten Korrekturwertes der Bestromung eine Anpassung der jeweiligen Ist-Kennlinie an die entsprechende Soll-Ventilkennlinie so weitgehende Verbesserungen erbringt, dass etwa verbleibende, toleranzbedingte Abweichungen in der Praxis als Abweichungen im Lenkverhalten nicht mehr spürbar sind.

Weitere Einzelheiten und Merkmale der Erfindung ergeben sich aus den Ansprüchen. Ferner wird die Erfindung nachstehend an Hand eines Ausführungsbeispieles mit weiteren Details und an Hand einiger Diagramme erläutert. Es zeigen:
- Fig. 1: in einer schematisierten Gesamtübersicht eine hydraulische Hilfskraftlenkung für Kraftfahrzeuge mit einem hydraulischen, drehmomentenabhängig arbeitenden Ventil und einem diesem zugeordneten elektro-hydraulischen Wandler zur geschwindigkeitsabhängigen Ansteuerung,
- Fig. 2: eine Prinzipdarstellung eines elektro-hydraulischen Wandlers in stark vereinfachter Form,
- Fig. 3: ein Kennliniendiagramm für hydraulische Hilfskraftlenkungen für Kraftfahrzeuge gemäß Fig. 1 im Schema, aus dem sich zur jeweiligen, einer Geschwindigkeit zugeordneten Soll-Ventilkennlinie über dem lenkradseitig vorgegebenen Eingangsmoment der am Servosteller der Hilfskraftlenkung wirksame Betätigungsdruck ergibt,
- Fig. 4: eine weitere vereinfachte, schematisierte, Diagrammdarstellung gemäß Fig. 3 mit Zuordnung der jeweiligen Wandlerbestromung zu den Soll- Ventilkennlinien,
- Fig. 5: in einer der Fig. 4 entsprechenden Darstellung eine bei der prüfstandsseitigen Überprüfung eines Lenkventiles gemessene Ventilkennlinie in Zuordnung zur entsprechenden Soll-Ventilkennlinie, und
- Fig. 6, Fig. 7: schematisiert Kennlinienfelder, in denen über der Geschwindigkeit die den ventilseitig bzw. servostellerseitig angestrebten Druckverläufen (Soll- Ventilkenn-linien) entsprechende Bestromung des Wandlers (Bestromungskennlinien) aufgetragen ist.
- Fig. 8: ein Kennliniendiagramm für eine hydraulische Hilfskraftlenkung für Kraftfahrzeuge, im Schema, bei dem - als theoretische Sollwerte - über dem lenkradseitig vorgegebenen Eingangsmoment der am Servosteller der Hilfskraftlenkung wirksame Betätigungsdruck für zugeordnete Geschwindigkeiten aufgetragen ist,
- Fig. 9: bezogen auf eine Diagrammdarstellung gemäß Fig. 8, und dementsprechend wiederum geschwindigkeitsabhängig, Soll-Ventilkennlinien mit zu den Geschwindigkeitsangaben gemäß Fig. 8 korrelierenden Bestromungsangaben für den elektro-hydraulischen Wandler, der dem Lenkventil der hydraulischen Hilfskraftlenkung zugeordnet ist
- Fig. 10: in einer der Fig. 9 entsprechenden, aber stark überzeichneten Darstellung eine bei der prüfstandsseitigen Überprüfung eines Lenkventiles über die Bestromung des Wandlers auf eine Soll-Ventilkennlinie korrigierte Ventilkennlinie zur Veranschaulichung des im Ventilprüfstand gegebenen Ablaufes, und
- Fig. 11: in einer schematisierten Blockbilddarstellung die prüfstandsseitige Ermittlung der toleranz-korrigierenden Bestromungskennlinie des Wandlers.

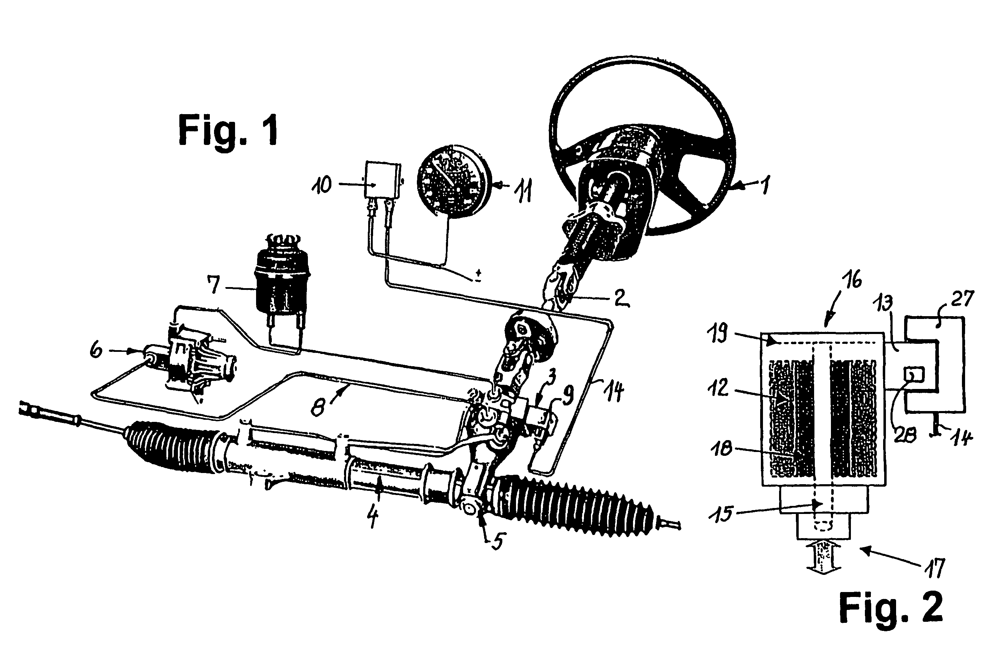

Fig. 1 zeigt eine schematisierte Gesamtdarstellung der wesentlichen Teile einer Hilfskraftlenkung für Fahrzeuge, wobei das Fahrzeug und dessen von der Lenkung beaufschlagte, lenkbare Räder nicht dargestellt sind. Mit 1 ist das Lenkrad bezeichnet, über das - als Eingangsmoment - fahrerseitig die jeweiligen Lenkbefehle eingegeben werden. Diese Lenkbefehle werden unter Vermittlung einer gelenkigen Lenkspindel 2 auf ein hydraulisches Lenkventil 3 übertragen, das, beispielsweise in der Ausgestaltung als Drehschieberventil, drehmomentenabhängig einen Servosteller 4 ansteuert. Über diesen werden die auf das Lenkrad 1 ausgeübten und über das Lenkgetriebe 5 übertragenen Lenkkräfte in Abhängigkeit von vorgegebenen Parametern, so insbesondere drehmomenten- und geschwindigkeitsabhängig unterstützend moduliert.

Das Lenkgetriebe 5 ist im Schema gemäß Fig. 1 als Zahnstangenlenkung ausgeführt. Der Servosteller 4 erstreckt sich als Kolbensteller etwa in Richtung der quer zum Fahrzeug zwischen den nicht dargestellten, lenkbaren Rädern sich erstreckenden Zahnstange. Die Zahnstange kämmt mit einem Ritzel, das mit dem Ausgangsglied des hydraulischen, drehmomentenabhängig arbeitenden Lenkventiles 3 verbunden ist.

Die hydraulische Druckversorgung erfolgt über eine Druckölpumpe 6, die mit dem Ölbehälter 7 in einem hydraulischen Versorgungskreis 8 liegt, der über das Lenkventil 3 zum Servosteller 4 führt.

Dem Lenkventil 3 ist ein elektro-hydraulischer Wandler 9 zugeordnet, über den eine geschwindigkeitsabhängige, hydraulische Beaufschlagung des Lenkventiles 3 überlagert zu dessen drehmomentenabhängiger Beaufschlagung erfolgt. Der Wandler 9 umfasst, wie in der Schemadarstellung gemäß Fig. 2 gezeigt, ein hydraulisches Ventil 17 und einen dieses beaufschlagenden Stellmagneten 16, der, wie in der Gesamtdarstellung gemäß Fig. 1 aufgezeigt, über ein Steuergerät 10 angesprochen wird. Das Steuergerät 10 setzt die über den insbesondere elektronischen Tachometer 11 erfasste Fahrgeschwindigkeit V in Stellsignale für den Stellmagneten 16 des Wandlers 9 um.

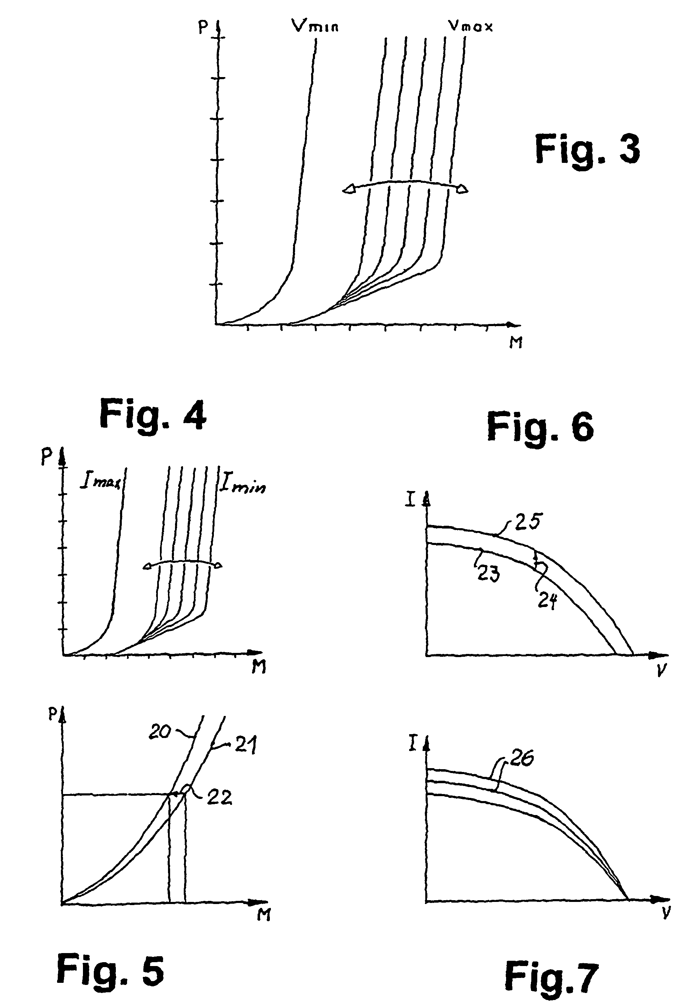

Die diesbezüglichen Funktionen sind beispielsweise der DE 42 20 624 A1 zu entnehmen, ebenso wie die Ausgestaltung des Ventiles 3 als Drehschieberventil, bei der der drehmomentenabhängigen Druckversorgung des Servostellers 4 eine geschwindigkeitsabhängige Ansteuerung überlagert ist, derart, dass die Servowirkung prinzipiell mit zunehmender Geschwindigkeit abnimmt, wie dies in Fig. 3 veranschaulicht ist, in der der am Servosteller 4 anstehende und über den Wandler 9 geschwindigkeitsabhängig modulierte Druck P über dem Eingangsmoment M aufgetragen ist.

Fig. 3 zeigt, dass bei kleinen Geschwindigkeiten Vₘᵢₙ eine starke Servowirkung gegeben ist, und dass diese Servowirkung gegen die maximale Geschwindigkeit abgebaut wird, so dass sich im Bereich kleiner Geschwindigkeiten, insbesondere beim Parkieren, trotz hoher Gegenkräfte eine nur geringe Eingangsmomente voraussetzende, weiche Lenkung ergibt, während die Lenkung gegen hohe Geschwindigkeiten zunehmend versteift wird, um ein direktes Lenkgefühl auch unter diesen Fahrgegebenheiten sicherzustellen.

Das Lenkventil 3 in der angesprochenen Ausgestaltung als Drehschieberventil weist, was nicht gezeigt ist, in bekannter Weise einen Grundaufbau auf, bei dem ein zur Lenkspindel 2 drehfester Drehschieber vorgesehen ist, der von einer Steuerbuchse umschlossen ist, die gegenüber der Lenkspindel 2 über eine Drehstabfeder begrenzt verdrehbar abgestützt ist und die über die Antriebsverbindung zum Lenkgetriebe 5 hergestellt wird. Die Steuerbuchse ist im Hinblick auf die drehmomentenüberlagernde geschwindigkeitsabhängige Ansteuerung des Lenkventiles über den Wandler 9 axial über einen zum Drehschieber, und damit zur Eingangswelle drehfesten Rückwirkungskolben beaufschlagbar, der in Richtung auf die zugewandte Stirnseite der Steuerbuchse federnd belastet ist, wobei zwischen den Stirnseiten Abdrängkörper liegen, über die bei Verdrehung des Rückwirkungskolbens gegenüber der Steuerbuchse der Rückwirkungskolben axial von der Steuerbuchse abgedrängt wird.

In Abhängigkeit von der über den Rückwirkungskolben in Richtung auf die Steuerbuchse axial ausgeübten Kraft ergibt sich durch diese Anordnung die Möglichkeit zur Beeinflussung der Drehsteife der Lenkung, da mit zunehmender axialer Beaufschlagung der Abdrängkörper zwischen Steuerbuchse und Rückwirkungskolben ein Drehmoment aufgebaut wird, das ergänzend zur Drehstabfeder wirkt, und damit entgegen der Verdrehrichtung der Steuerbuchse über das Eingangsmoment.

Die den Rückwirkungskolben in Richtung auf die Steuerbuchse axial beaufschlagende Kraft kann über den Wandler geschwindigkeitsabhängig vergrößert werden, indem Rückwirkungskolben hydraulisch in Richtung auf die Steuerbuchse beaufschlagt wird. Eine derartige Lösung ist aus der DE 42 20 624 A1 bekannt.

Bei einer anderen, aus der DE 42 01 311 C1 bekannten Lösung ist konstruktiv, durch entsprechende Federbeaufschlagung des Rückwirkungskolbens, eine hohe axiale Verspannung des Rückwirkungskolbens gegen die Steuerbuchse gegeben, so dass konstruktiv eine steife Lenkung vorgegeben ist, wie sie bei hohen Geschwindigkeiten angestrebt wird, und es wird über die wandlergesteuerte hydraulische Beaufschlagung der Rückwirkungskolben entgegen der Beaufschlagungskraft der Feder abgedrängt, wenn eine weiche Lenkung, also eine Lenkung mit hoher Servounterstützung beispielsweise im Parkierbereich angestrebt wird.

Eine solche Ausgestaltung gemäß der DE 42 20 624 A1 wird für die nachfolgende Erläuterung der Erfindung vorausgesetzt, bei der, entsprechend der hohen Servowirkung bei niedrigen Geschwindigkeiten, über den Wandler 9 durch entsprechend hohe Bestromung des Magnetstellers 16 eine Druckbeaufschlagung vorgegeben wird. Damit wird auch erreicht, dass bei ausfallender Bestromung die Servowirkung entfällt und damit in gefährlichen Geschwindigkeitsbereichen das gewohnte, steife Lenkverhalten im Wesentlichen erhalten bleibt.

Der schematisierten Darstellung in Fig. 3, in der als Soll-Ventilkennlinien, bezogen auf jeweils eine konstante Geschwindigkeit, der in Abhängigkeit von einem Eingangsmoment M sich einstellende Betätigungsdruck P aufgetragen ist, ist zu entnehmen, dass bei um Null liegender Minimalgeschwindigkeit Vₘᵢₙ eine hohe Servowirkung gegeben ist, so dass im Parkierbereich durch hohe Servounterstützung eine leichtgängige Lenkung realisiert ist, während gegen Höchstgeschwindigkeit Vₘₐₓ die Lenkung zunehmend straffer wird.

Fig. 4 zeigt, stark schematisiert und analog zu Fig. 3, für jeweils eine Geschwindigkeit gegebene Ventilkennlinienverläufe, unter der jeweiligen Geschwindigkeit entsprechender Bestromung des Wandlers. Diese ist, entsprechend der vorstehend erläuterten Ausgangslage, mit Iₘₐₓ im Parkierbereich am größten und verringert sich mit abnehmender Servowirkung gegen Iₘᵢₙ, entsprechend dem Höchstgeschwindigkeitsbereich Vₘₐₓ.

Die aus Fig. 3 und 4 ersichtliche geschwindigkeitsabhängige Variation der vom Eingangsmoment M abhängigen Servowirkung erfolgt somit über eine entsprechende Bestromung des dem Wandler 9 zugeordneten Stellmagneten 16, der über einen Anschluss 13 und eine Leitungsverbindung 14 mit dem Steuergerät 10 verbunden ist und der einen Anker 15 aufweist, der eine Spule 12 und einen Eisenkern 18 durchsetzt und über eine Feder 19 so belastet ist, dass bei fehlender Bestromung des Stellmagneten 16 das Ventil 17 geöffnet ist.

Die grundsätzlich geschwindigkeitsabhängige Bestromung des Stellmagneten 16 wird im Rahmen der Erfindung genutzt, um insbesondere toleranzbedingte Abweichungen des Lenkventiles 3 und dadurch bedingte Streuungen im Lenkverhalten zu kompensieren, was schematisch in Fig. 5 gezeigt ist, in der mit 20 entsprechend der Darstellung in Fig. 4 eine Soll-Ventilkennlinie bezeichnet ist, während bei 21 eine zum Abschluss der Ventilmontage auf den Prüfstand aufgenommene, zur Soll-Ventilkennlinie 20 korrespondierende Ist-Ventilkennlinie gezeigt ist. Über den Pfeil 22 ist die zur Kompensation der Abweichung zwischen Ist-Ventilkennlinie 21 und der Soll-Ventilkennlinie 20 nötige Korrektur angedeutet.

Hierfür veranschaulichen die Fig. 6 und 7 zwei im Rahmen der Erfindung liegende Möglichkeiten, nämlich in Fig. 6 eine entsprechend der Abweichung gemäß Pfeil 22 vorgenommene, generelle Anhebung der Bestromung, d. h. der Stromstärke über der Geschwindigkeit, wobei der Ist-Ventilkennlinie 21 in Fig. 5 eine Bestromungskennlinie 23 entspricht, die durch Anhebung der Bestromung gemäß Pfeil 24 in eine Bestromungskennlinie 25 überführt wird, die so gewählt ist, dass sich gemittelt eine bestmögliche Näherung der Ist-Ventilkennlinie 21 an die Soll-Ventilkennlinie 20 gemäß Fig. 5 und den dieser entsprechenden Druckverlauf ergibt. Erreichbar ist eine solche generelle Anhebung hardwaremäßig beispielsweise dadurch, dass steuergeräteseitig ein entsprechend erhöhter Strom vorgegeben wird oder dass magnetstellerseitig beispielsweise durch Abtrennen mindestens eines in Parallelschaltung zur Spule 12 vorgesehenen Widerstandes eine entsprechende Erhöhung des über die Spule 12 fließenden Stromes erreicht wird.

Fig. 7 veranschaulicht die weitere Möglichkeit mit einem Kennfeld zu arbeiten, von dem jeweils diejenige Bestromungskennlinie aktiviert wird, die geeignet ist, die gemessene Ist-Situation an die gewünschte Soll-Situation durch Änderung der Stromstärke bestmöglich anzupassen.

Für das praktische Vorgehen erweist es sich als zweckmäßig, das jeweilige Prüfstandsergebnis für die Einheit von Lenkventil 3 mit Wandler 9 als Ist-Ventilkennlinie zu erfassen, bezüglich des Grades der Abweichung von einer vorgegebenen Soll-Ventilkennlinie zu klassifizieren und die jeweilige Klassifizierung der jeweiligen Montageeinheit "mitzugeben", insbesondere abrufbar mitzugeben. Der gewählten Klassifizierung entsprechend ist zweckmäßigerweise steuergeräteseitig oder seitens des Stellmagneten 16 eine Ausrüstung gegeben, die, entsprechend der jeweiligen Klassifikation, zur Zupaarung einer entsprechenden, korrigierenden Bestromung führt. Zweckmäßigerweise erfolgt diese Zupaarung automatisiert, wenn bei der Montage der Lenkung diese mit dem Lenkventil in das jeweilige Fahrzeug eingebaut und entsprechend angeschlossen wird.

Beim Anschluss kann das beispielsweise in einem Speicherbaustein 28, wie er in Fig. 2 schematisch angedeutet ist, abgelegte Klassifikationsergebnis auf das Steuergerät 10 oder auch auf den Adapter 27 übertragen werden, falls eine entsprechende Anpassung der Stromstärke erst über den Adapter 27 vorgenommen wird.

Die nachfolgende Beschreibung des prüf- und toleranzkorrigierenden Einstellverfahrens für eine hydraulisch arbeitende Fahrzeug-Servolenkung bezieht sich auf eine Ausgestaltung einer solchen Servolenkung, wie sie beispielsweise aus der DE 42 20 624 A1 bekannt ist, bei der als Lenkventil ein Drehschieberventil vorgesehen ist, das in der Ansteuerung eines Servostellers liegt und über das die Druckversorgung des Servostellers in Abhängigkeit vom Lenkeingangsmoment drehmomentenabhängig, und überlagert hierzu geschwindigkeitsabhängig, erfolgt, und zwar grundsätzlich derart, dass die Servowirkung mit zunehmender Geschwindigkeit abnimmt. Die geschwindigkeitsabhängige Druckkomponente wird über einen elektro-hydraulischen Wandler beigesteuert, dessen Bestromung geschwindigkeitsabhängig erfolgt.

Für das Lenkventil sind verschiedene Bauformen möglich, wie beispielsweise die genannte DE 42 20 624 A1 und die DE 42 01 311 C1 veranschaulichen. Bei der erstgenannten Druckschrift wird die geschwindigkeitsabhängige Druckkomponente genutzt, um - durch Erhöhung der Bestromung korrespondierend zur ansteigenden Geschwindigkeit - die in der mechanischen Grundauslenkung bei niedrigen Geschwindigkeiten, so beispielsweise im Parkierbereich weiche Lenkung korrespondierend zum Anstieg der Geschwindigkeit durch zunehmende Druckbeaufschlagung über den elektro-hydraulischen Wandler zu versteifen. Die zweitgenannte DE 42 01 311 C1 geht den umgekehrten Weg und gibt eine harte mechanische Grundauslegung vor, die im Bereich niedriger Geschwindigkeiten, so beispielsweise im Parkierbereich, durch den über den elektro-hydraulischen Wandler beigesteuerten Druckanteil weich gemacht wird, und bei der dementsprechend, zur Verhärtung der Lenkung gegen hohe Geschwindigkeiten, der über den elektro-hydraulischen Wandler beigesteuerte Druckanteil verringert wird.

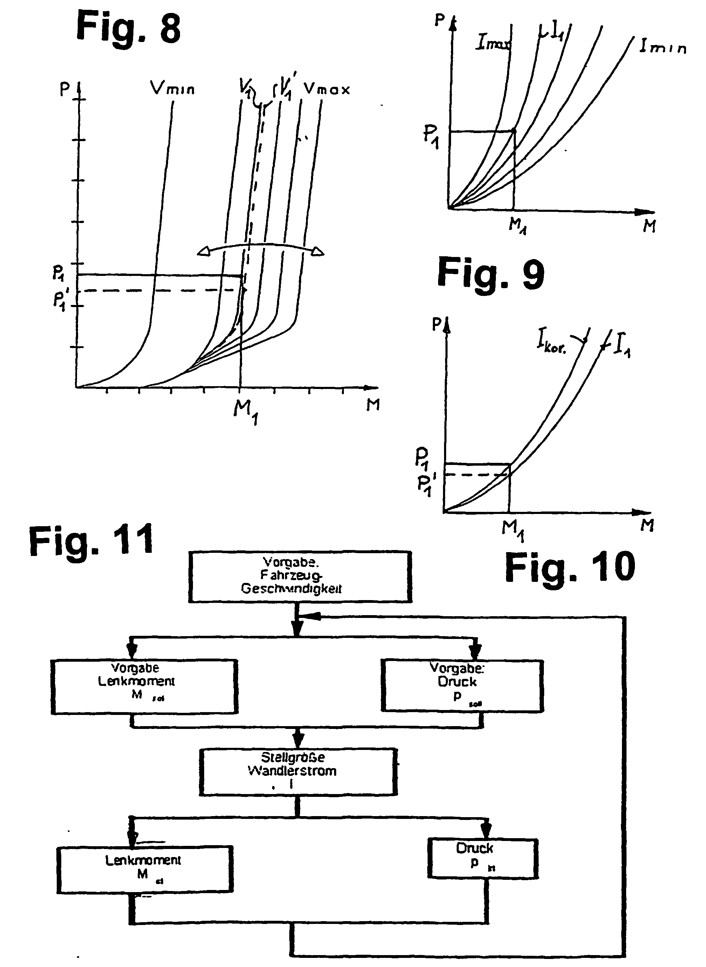

Von einer derartigen Lösung geht die Schemadarstellung gemäß Fig. 9 aus, bei der, korrespondierend zur Darstellung gemäß Fig. 8, den geschwindigkeitsabhängigen Ventilkennlinien entsprechende, und damit auch geschwindigkeitsabhängige Bestromungsangaben zugeordnet sind, wobei die Ventilkennlinie minimaler Bestromung der Ventilkennlinie maximaler Geschwindigkeit entspricht, und umgekehrt.

Für das erfindungsgemäße Prüf- und Einstellverfahren, das im Schema gemäß Fig. 11 gezeigt ist und das nachstehend erläutert wird, wird die geschwindigkeitsabhängige Bestromung des elektro-hydraulischen Wandlers als Ansatzpunkt für die Korrektur toleranzbedingter Abweichungen von der der jeweilig vorgegebenen Lenkkennlinie entsprechenden (theoretischen) Soll-Ventilkenn-linie (Fig. 8) genutzt. Es wird der bezogen auf eine vorgegebene Fahrgeschwindigkeit V₁ und ein Lenkeingangsmoment M₁ gegebene (theoretische) Beaufschlagungsdruck P₁ des Servostellers als Sollwert auf Abweichungen beobachtet und etwaige Abweichungen werden durch die Korrektur des Wandlerstromes abgeglichen.

Fig. 8 veranschaulicht strichliert - und schematisch - zu einer bezogen auf eine Fahrzeuggeschwindigkeit V₁ gegebenen Soll-Ventilkennlinie V₁ eine durch die angesprochenen Toleranzen sich ergebende Ist-Ventilkennlinie V₁', so dass sich bezogen auf das gleiche Lenkeingangsmoment ein Beaufschlagungsdruck P₁' ergibt.

Fig. 9 zeigt den Sollwertverläufen, also den jeweiligen (theoretischen) Soll-Ventilkennlinien gemäß Fig. 8 entsprechende Ventilkennlinien mit zur jeweiligen Geschwindigkeit korrelierender Bestromung, wobei eine dieser Kennlinien, entsprechend der Soll-Ventilkennlinie V₁ in Fig. 8, mit I₁ bezeichnet ist. Wie erkennbar ändert sich der Beaufschlagungsdruck P somit korrespondierend zur Geschwindigkeit in Abhängigkeit von der dieser Geschwindigkeit entsprechenden Bestromung des Wandlers und dem Lenkeingangsmoment.

Fig. 10 veranschaulicht, dass, bezogen auf das gleiche Lenkeingangsmoment, der Beaufschlagungsdruck P durch Änderung der Stromstärke veränderlich ist, beispielsweise also die toleranzbedingte Veränderung des Beaufschlagungsdruckes von P₁ nach P₁' trotz einer der Soll-Ventilkennlinie V₁ entsprechenden Bestromung I₁ durch eine Veränderung der Bestromung des Wandlers ausgeglichen werden kann, bezogen auf die Darstellung gemäß Fig. 10 durch Anheben der Stromstärke I₁ auf eine Stromstärke Iₖₒᵣ, die größer ist als die der Soll-Ventilkennlinie V₁ entsprechende Stromstärke I₁ und die den Beaufschlagungsdruck von P₁', die Toleranzen abgleichend, auf P₁ zurückführt.

Der über den Wandler laufende Strom bildet also eine Stellgröße, über die, rückgekoppelt auf die jeweils gegebene Fahrzeuggeschwindigkeit und das vorgegebene Lenkeingangsmoment, eine Druckbeaufschlagung des Servostellers zu erreichen ist, die der theoretischen Sollvorgabe, also der Soll-Ventilkennlinie zumindest in guter Annäherung entspricht.

Eine entsprechende Korrektur kann, bezogen auf eine jeweilige Fahrgeschwindigkeit, für beliebige Fahrgeschwindigkeiten abgespeichert werden, indem im Prüfverfahren der Wandlerstrom in Abhängigkeit von der Fahrgeschwindigkeit bezogen auf die jeweilige Soll-Ventilkennlinie dynamisch abgespeichert wird, so dass in der Überlagerung der Bestromungskennlinie zur in Abhängigkeit vom Lenkeingangsmoment gegebenen mechanisch-hydraulischen Ist-Kennlinie eine weitgehende Annäherung an die theoretische Soll-Kennlinie erreichbar ist.

Die entsprechende Abspeicherung des korrigierten Bestromungswertes kann sowohl im Steuergerät erfolgen, als auch zugeordnet zum Wandler, wobei letzteres eine vorteilhafte erfindungsgemäße Lösung darstellt, da bezogen auf die Einheit Lenkventil mit Wandler, ungeachtet der jeweiligen Bestromungsvorgabe über das Steuergerät, die Bestromung wandlerseitig individuell angepasst werden kann, was eine standardisierte fahrzeugseitige Voreinstellung des Steuergerätes und den Abgleich von bezogen auf diese Voreinstellung bei der jeweiligen Prüfeinheit auftretenden Ungenauigkeiten durch die wandlerseitig, ausgehend von dieser Voreinstellung, abgespeicherte Korrektur erlaubt, somit bei der Montage der geprüften Einheit im Fahrzeug eine unmittelbare Berücksichtigung finden kann. Entsprechende Korrekturwerte können, zugepaart zum Wandler, gegebenenfalls mit Anschluss im Fahrzeug, auch auf das Steuergerät überspielt werden, um nachfolgend über das Steuergerät unmittelbar eine "korrigierte" Bestromung des Wandlers zu erreichen.

Das erfindungsgemäße Einstell- und Prüfverfahren erlaubt es im Extremfall auch, mit nur einem Messpunkt bezüglich einer vorgegebenen Geschwindigkeit zu arbeiten und die bezüglich dieses Messpunktes vorzunehmende, korrigierende Änderung der Bestromung des elektro-hydraulischen Wandlers auf die jeweilige Ventilkennlinie insgesamt korrigierend zu übertragen, da die geschwindigkeitsabhängigen Kurvenverläufe grundsätzlich, insbesondere bezüglich der Kurvenkrümmung, durch das mechanischhydraulische Verhalten des Lenkventiles vorgegeben sind und die toleranzbedingten Abweichungen verhältnismäßig klein sind und den Kurvenverlauf in seiner Charakteristik kaum beeinflussen.

Im Rahmen der Erfindung liegt es selbstverständlich aber auch, bezogen auf die für eine Geschwindigkeit gegebene Ventilkennlinie mehrere Messpunkte anzufahren und eine entsprechende Kalibrierung interpolierend vorzunehmen, so dass der theoretische Ventilkennlinienverlauf, also die jeweilige Soll-Ventilkennlinie in noch besserer Anordnung getroffen wird, wobei ein Vorgehen dieser Art bezogen auf mehrere Ventilkennlinien zweckmäßig ist.

Mit der Erfindung wird somit ein Prüf- und Einstellverfahren für hydraulisch arbeitende Fahrzeug-Servolenkungen geschaffen, bei denen der Beaufschlagungsdruck des Servostellers in Abhängigkeit von einem Lenkeingangsmoment und geschwindigkeitsabhängig beeinflusst ist, wobei die geschwindigkeitsabhängige Beeinflussung über einen elektro-hydraulischen Wandler erfolgt, dessen Bestromung im Hinblick auf die Korrektur von Toleranzen überlagert zur geschwindigkeitsabhängigen Festlegung einstellbar ist, so dass mit geringem Aufwand eine Kompensation toleranzbedingter Abweichungen von den Soll-Vorgaben möglich ist.

## Patentansprüche

1. Hydraulische Hilfskraftlenkung für Kraftfahrzeuge mit folgenden Merkmalen:
• die hydraulische Hilfskraftlenkung weist ein hydraulisches Lenkventil (3) auf, über das drehmomentenabhängig, und überlagert hierzu über ein Steuergerät (10) geschwindigkeitsabhängig, die hydraulische Beaufschlagung eines lenkkraftunterstützenden Servostellers (4) gesteuert ist, und das in seiner Ansteuerung mit einem elektro-hydrauilschen Wandler (9) arbeitet,
• das Lenkventil (3) weist eine dem Soll-Lenkverhalten der Lenkung entsprechende Soll-Ventilkennlinie auf und wird seitens des Stellmagneten (16) des elektro-hydraulischen Wandlers (9) an der Soll-Ventilkennlinie orientiert bestromt,
• dem Stellmagneten (16) sind mehrere Bestromungskennlinien (25, 26) zugeordnet und von diesen ist eine die Abweichung der jeweiligen Ist-Ventilkennlinie von der dem Soll-Lenkverhalten entsprechenden Soll-Ventlikennlinie korrigierende Bestromungskennlinie zuschaltbar,
• die dem Stellmagneten (16) zugeordneten Bestromungskennlinien sind *steuergeräteseitig oder wandlerseitig oder* magnetstellerseitig abgelegt.

2. Hydraulische Hilfskraftienkung nach Anspruch 1,
**dadurch gekennzeichnet,**
**dass** die dem Stellmagneten (16) zugeordneten Bestromungskennlinien steuergeräteseitig abgelegt sind.

3. Hydraulische Hilfskraftlenkung nach Anspruch 1 oder 2,
**dadurch gekennzeichnet,**
**dass** die steuergeräteseitig oder wandlerseitig abgelegten Bestromungskennlinien einem Adapter (27) zugeordnet sind.

4. Hydraulische Hilfskraftlenkung nach Anspruch 1 oder 3,
**dadurch gekennzeichnet,**
**dass** der Adapter (27) dem Stellmagneten (16) zugeordnet ist.

5. Hydraulische Hilfskraftlenkung nach einem der vorhergehenden Ansprüche,
**dadurch gekennzeichnet,**
**dass** die jeweilige Ist-Ventilkennlinie des Lenkventils (3), insbesondere bezüglich ihrer Abweichung von der Soll-Ventilkennlinie des Lenkventiles (3), klassifiziert ist.

6. Hydraulische Hilfskraftlenkung nach einem der vorhergehenden Ansprüche,
**dadurch gekennzeichnet,**
**dass** die Bestromungskennlinie des Stellmagneten (16), insbesondere bezüglich ihrer Abweichung von der der Soll-Venfilkennlinie entsprechenden Bestromungskennlinie, klassifiziert ist.

7. Hydraulische Hilfskraftlenkung nach einem der vorhergehenden Ansprüche,
**dadurch gekennzeichnet,**
**dass** die Klassifikationswerte der Ist-Ventilkennlinien und der hierzu korrespondierend korrigierenden Bestromungskennlinien einander zugepaart sind.

8. Hydraulische Hilfskraftlenkung nach einem der vorhergehenden Ansprüche,
**dadurch gekennzeichnet,**
**dass** die Klassifikationswerte der Ist-Ventilkennlinien bzw. der korrespondierend korrigierenden Bestromungskennlinien dem Lenkventil (3) bzw. dem Wandler (9) bzw. dem Steuergerät (10) zugeordnet abgespeichert und bei der Montage aktivierbar sowie einander aufrufend zugepaart sind.

9. Hydraulische Hilfskraftlenkung nach einem der vorhergehenden Ansprüche,
**dadurch gekennzeichnet,**
**dass** die Bestromungslinien digital abgelegt sind.

10. Hydraulische Hilfskraftlenkung nach einem der Ansprüche 1 bis 8,
**dadurch gekennzeichnet,**
**dass** die Bestromungskennlinien durch zuschaltbare Hardware-Konfigurationen variabel sind.

11. Einstellverfahren für hydraulische Hilfskraftlenkungen, insbesondere zum Abgleich von durch Fertigungstoleranzen bedingten Abweichungen von einem Soll-Lenkverhalten solcher Fahrzeug-Servolenkungen, bei denen die hydraulische Druckbeaufschlagung eines Servostellers über ein Lenkventil erfolgt, über das der einer Soll-Ventilkennlinie entsprechende Beaufschlagungsdruck eingestellt wird, der in Abhängigkeit vom Lenkeingangsmoment sowie, überlagert hierzu, über einen elektro-hydraulischen Wandler in Abhängigkeit von der Fahrzeuggeschwindigkeit festgelegt wird, die als Eingangsgröße, insbesondere in einem Steuergerät, verarbeitet wird, wobei der Wandler mit einer zur Fahrzeuggeschwindigkeit korrespondierenden Stromstärke beaufschlagt wird,
**dadurch gekennzeichnet,**
**dass**, bezogen auf eine vorgegebene Fahrgeschwindigkeit, der einer Ist-Ventilkennlinie entsprechende Beaufschlagungsdruck durch Änderung der Stromstärke des über den Wandler laufenden Stromes gegen den Soll-Beaufschlagungsdruck abgeglichen wird und dass in Bezug auf die geschwindigkeitsabhängige Bestromung des Wandlers eine entsprechende Kalibrierung durchgeführt wird.

12. Prüfverfahren nach Anspruch 11,
**dadurch gekennzeichnet,**
**dass** Ist- und Soll-Ventilkennlinie bezogen auf eine vorgegebene Fahrgeschwindigkeit abgeglichen werden.

13. Prüfverfahren nach Anspruch 11,
**dadurch gekennzeichnet,**
**dass** Ist- und Soll-Ventilkennlinie bezogen auf mehrere vorgegebene Fahrgeschwindigkeiten abgeglichen werden.

14. Prüfverfahren nach einem der vorhergehenden Ansprüche,
**dadurch gekennzeichnet,**
**dass** die Kalibrierung der geschwindigkeitsabhängigen Bestromung steuergeräteseitig vorgenommen wird.

15. Prüfverfahren nach einem der Ansprüche 11 bis 13,
**dadurch gekennzeichnet,**
**dass** die Kalibrierung der geschwindigkeitsabhängigen Bestromung wandlerseitig vorgenommen wird.

## Claims

1. Hydraulic servo-assisted steering system for motor vehicles, having the following features:
• the hydraulic servo-assisted steering system has a hydraulic steering valve (3) via which, as a function of torque and, superimposed on this, via a controller (10), the hydraulic loading of a steering-force-assisting servo actuator (4) is controlled as a function of speed and which, in terms of its actuation, operates with an electro-hydraulic converter (9),
• the steering valve (3) has a set valve characteristic curve corresponding to the set steering behaviour of the steering system and, by the actuating magnet (16) of the electro-hydraulic converter (9), is energized in a manner oriented to the set valve characteristic curve,
• the actuating magnet (16) is assigned a plurality of energization characteristic curves (25, 26), and of these, an energization characteristic curve that corrects the deviation of the respective actual valve characteristic curve from the set valve characteristic curve corresponding to the set steering behaviour can be connected,
• the energization characteristic curves assigned to the actuating magnet (16) are stored by the controller or by the converter or by the magnetic actuator.

2. Hydraulic servo-assisted steering system according to Claim 1, **characterized in that** the energization characteristic curves assigned to the actuating magnet (16) are stored by the controller.

3. Hydraulic servo-assisted steering system according to Claim 1 or 2, **characterized in that** the energization characteristic curves stored by the controller or converter are assigned to an adapter (27).

4. Hydraulic servo-assisted steering system according to Claim 1 or 3, **characterized in that** the adapter (27) is assigned to the actuating magnet (16).

5. Hydraulic servo-assisted steering system according to one of the preceding claims, **characterized in that** the respective actual valve characteristic curve of the steering valve (3) is classified, in particular with regard to its deviation from the set valve characteristic curve of the steering valve (3).

6. Hydraulic servo-assisted steering system according to one of the preceding claims, **characterized in that** the energization characteristic curve of the actuating magnet (16) is classified, in particular with regard to its deviation from the energization characteristic curve corresponding to the set valve characteristic curve.

7. Hydraulic servo-assisted steering system according to one of the preceding claims, **characterized in that** the classification values of the actual valve characteristic curves and the corrective energization characteristic curves corresponding to these are paired with one another.

8. Hydraulic servo-assisted steering system according to one of the preceding claims, **characterized in that** the classification values of the actual valve characteristic curves and the correspondingly corrective energization characteristic curves, respectively, are stored assigned to the steering valve (3) or the converter (9) or the controller (10) and can be activated during the mounting and paired so as to call one another.

9. Hydraulic servo-assisted steering system according to one of the preceding claims, **characterized in that** the energization characteristic curves are stored digitally.

10. Hydraulic servo-assisted steering system according to one of Claims 1 to 8, **characterized in that** the energization characteristic curves can be varied by means of hardware configurations that can be connected.

11. Setting method for hydraulic servo-assisted steering systems, in particular for compensating for deviations induced by production tolerances from a set steering behaviour of such vehicle servo steering systems, in which the hydraulic pressure loading of a servo actuator is carried out via a steering valve, via which the loading pressure corresponding to a set valve characteristic curve is adjusted, which pressure is defined as a function of the input steering torque and, superimposed on this, via an electro-hydraulic converter as a function of the vehicle speed, which speed is processed as an input variable, in particular in a controller, the converter being acted on with a current intensity corresponding to the vehicle speed, **characterized in that**, based on a predefined speed of travel, the loading pressure corresponding to an actual valve characteristic curve is equalized to the set loading pressure by changing the current intensity of the current flowing via the converter and **in that** a corresponding calibration is carried out in relation to the speed-dependent energization of the converter.

12. Testing method according to Claim 11,
**characterized in that** the actual and set valve characteristic curves are equalized on the basis of a predefined speed of travel.

13. Testing method according to Claim 11,
**characterized in that** the actual and set valve characteristic curves are equalized on the basis of a plurality of predefined speeds of travel.

14. Testing method according to one of the preceding claims, **characterized in that** the calibration of the speed-dependent energization is performed on the controller side.

15. Testing method according to one of Claims 11 to 13, **characterized in that** the calibration of the speed-dependent energization is performed on the converter side.

## Revendications

1. Direction assistée hydraulique pour véhicules automobiles possédant les caractéristiques suivantes :
* La direction assistée hydraulique présente une vanne de direction hydraulique (3) par le biais de laquelle, en fonction du couple, et en superposition à cela en fonction de la vitesse par le biais d'un appareil de commande (10), est commandée la sollicitation hydraulique d'un servopositionneur (4) de soutien de la force de direction, et qui pour sa commande fonctionne avec un convertisseur électro-hydraulique (9),
* La vanne de direction (3) présente une courbe de consigne de la vanne correspondant au comportement voulu de la direction et elle est alimentée du côté de l'électroaimant de commande (16) du convertisseur électro-hydraulique (9) en fonction de la courbe de consigne de la vanne,
* Plusieurs courbes d'alimentation (25, 26) sont affectées à l'électroaimant de commande (16) et de celles-ci peut être ajoutée une courbe d'alimentation corrigeant la courbe de consigne de la vanne correspondant à l'écart entre la courbe réelle de la vanne et le comportement voulu de la direction,
* Les courbes d'alimentation affectées à l'électroaimant de commande (16) sont stockées du côté de l'appareil de commande ou du côté du convertisseur ou du côté du positionneur électromagnétique.

2. Direction assistée hydraulique selon la revendication 1, **caractérisé en ce que** les courbes d'alimentation affectées à l'électroaimant de commande (16) sont stockées du côté de l'appareil de commande.

3. Direction assistée hydraulique selon la revendication 1 ou 2, **caractérisé en ce que** les courbes d'alimentation stockées du côté de l'appareil de commande ou du côté du convertisseur sont affectées à un adaptateur (27).

4. Direction assistée hydraulique selon la revendication 1 ou 3, **caractérisé en ce que** l'adaptateur (27) est affecté à l'électroaimant de commande (16).

5. Direction assistée hydraulique selon l'une des revendications précédentes, **caractérisé en ce que** la courbe réelle correspondante de la vanne de direction (3) est classifiée, notamment en fonction de son écart par rapport à la courbe de consigne de la vanne de direction (3).

6. Direction assistée hydraulique selon l'une des revendications précédentes, **caractérisé en ce que** la courbe d'alimentation de l'électroaimant de commande (16) est classifiée, notamment en fonction de son écart par rapport à la courbe d'alimentation correspondant à la courbe de consigne de la vanne de direction.

7. Direction assistée hydraulique selon l'une des revendications précédentes, **caractérisé en ce que** les valeurs de classification des courbes réelles de la vanne et les courbes d'alimentation corrigées qui y correspondent sont appairées les unes aux autres.

8. Direction assistée hydraulique selon l'une des revendications précédentes, **caractérisé en ce que** les valeurs de classification des courbes réelles de la vanne ou des courbes d'alimentation corrigées correspondantes sont enregistrée en étant affectées à la vanne de direction (3) ou au convertisseur (9) ou à l'appareil de commande (10) et peuvent être activées et sont appairées de manière à s'invoquer entre elles lors du montage.

9. Direction assistée hydraulique selon l'une des revendications précédentes, **caractérisé en ce que** les courbes d'alimentation sont stockées sous forme numérique.

10. Direction assistée hydraulique selon l'une des revendications 1 à 8, **caractérisé en ce que** les courbes d'alimentation sont variables par des configurations matérielles pouvant être ajoutées.

11. Procédé de réglage pour directions assistées hydrauliques, notamment pour compenser les écarts liés aux tolérances de fabrication par rapport au comportement de direction de consigne des directions assistées pour véhicule avec lesquelles l'application de la pression hydraulique à un servopositionneur s'effectue par le biais d'une vanne de direction, par le biais duquel est réglée la pression de sollicitation correspondant à une courbe de consigne de la vanne, laquelle est définie en fonction du couple d'entrée de la direction et, en superposition à cela, par le biais d'un convertisseur électro-hydraulique en fonction de la vitesse du véhicule, le convertisseur étant sollicité par une intensité de courant correspondant à la vitesse du véhicule, **caractérisé en ce** la pression de sollicitation correspondant à une courbe réelle de la vanne est compensée en référence à une vitesse de déplacement prédéfinie en modifiant l'intensité du courant qui circule à travers le convertisseur par rapport à la pression de sollicitation de consigne et qu'un calibrage correspondant est réalisé en référence à l'alimentation du convertisseur en fonction de la vitesse.

12. Procédé de contrôle selon la revendication 11, **caractérisé en ce que** les courbes réelle et de consigne de la vanne sont compensées en référence à une vitesse de déplacement prédéfinie.

13. Procédé de contrôle selon la revendication 11, **caractérisé en ce que** les courbes réelle et de consigne de la vanne sont compensées en référence à plusieurs vitesses de déplacement prédéfinies.

14. Procédé de contrôle selon l'une des revendications précédentes, **caractérisé en ce que** le calibrage de l'alimentation en fonction de la vitesse est réalisé du côté de l'appareil de commande.

15. Procédé de contrôle selon l'une des revendications 11 à 13, **caractérisé en ce que** le calibrage de l'alimentation en fonction de la vitesse est réalisé du côté du convertisseur.
